# EUROPÄISCHE PATENTSCHRIFT

(11) **EP 1 040 712 B1**
(45) Veröffentlichungstag und Bekanntmachung des Hinweises auf die Patenterteilung: **13.10.2004**
(21) Anmeldenummer: 98963376.3
(22) Anmeldetag: 24.11.1998
(51) Int. Cl.: H04Q 11/04

(54) **ANORDNUNG UND VERFAHREN ZUR STEUERUNG EINER DATENÜBERTRAGUNG ZWISCHEN EINER ERSTEN UND EINER ZWEITEN ATM-EINRICHTUNG**
DEVICE AND METHOD FOR CONTROLLING A DATA TRANSMISSION OPERATION BETWEEN A FIRST ATM DEVICE AND A SECOND ATM DEVICE
CONFIGURATION ET PROCEDE DE COMMANDE D'UNE TRANSMISSION DE DONNEES ENTRE UN PREMIER ET UN DEUXIEME EQUIPEMENT MTA

(30) Priorität: 12.12.1997 DE 19755373
(43) Veröffentlichungstag der Anmeldung: 04.10.2000
(73) Patentinhaber: SIEMENS AKTIENGESELLSCHAFT, 80333 München (DE)
(72) Erfinder: DEML, Reinhard, D-81549 München (DE); BOLL, Gunnar, D-85579 Neubiberg (DE)
(86) Internationale Anmeldenummer: PCT/DE1998/003461
(87) Internationale Veröffentlichungsnummer: WO 1999/031922

(56) Entgegenhaltungen:
- US-A- 5 548 587

## Beschreibung

Durch den zunehmenden Bedarf an einer Übertragung von Video-Information in der modernen Kommunikationstechnik, wie z.B. Fest- und Bewegtbilder bei Bildtelefonanwendungen, oder die Darstellung von hochauflösenden Graphiken an modernen Personalcomputern, steigt die Bedeutung von Übertragungs- und Vermittlungstechniken für hohe Datenübertragungsraten (größer 100 Mbit/s). Ein bekanntes Datenübertragungsverfahren für hohe Datengeschwindigkeiten ist der Asynchrone Transfer Modus (ATM). Eine Datenübertragung auf Basis des Asynchronen Transfer Modus ermöglicht derzeit eine variable Übertragungsbitrate von bis zu 622 Mbit/s.

Bekannte Vermittlungseinrichtungen, auch solche auf Basis des Asynchronen Transfer Modus, sind üblicherweise modular aufgebaut. Dabei sind in der Regel eine Vielzahl von Baugruppen - die z.B. eine Schnittstelle zum Anschluß von Teilnehmerleitungen, eine zentrale Steuerung oder eine Durchschalteeinrichtung realisieren - auf einer, allen Baugruppen gemeinsamen, zentralen Steckerbaugruppe, einer sogenannten 'Backplane' einsteckbar und über diese miteinander verbunden. Die dadurch erzielte Modularität der Vermittlungseinrichtungen ermöglicht unter anderem eine leichte Anpassung einer Vermittlungseinrichtung an unterschiedliche Konfigurationen, sowie eine vereinfachte Fehleranalyse bei Serciveleistungen.

Aus dem Datenblatt "MPC860SAR - Functional Design Specification", Motorola, 6/97 ist ein Steuerbaustein MPC860SAR bekannt, der z.B. für einen Anschluß einer Baugruppe an eine ATM-Vermittlungseinrichtung eine 8-bit-breite bidirektionale ATM-spezifische-Busschnittstelle (UTOPIA-Schnittstelle: Universal Test & Operations PHY Interface for ATM) aufweist. Der bekannte Steuerbaustein steuert einen, über einen anschließbaren Datenbus realisierbaren Datentransfer, d.h. dieser Steuerbaustein ist ein 'Master'-Baustein für den an ihn anschließbaren 8-bit-breiten Datenbus.

Aus dem Datenblatt "ICs for Communication - PBX 4240", Siemens AG, 10/96, Bestell-Nr. T4240-XV12-P1-7600, ist ein Steuerbaustein PXB 4240 bekannt, der zwei 8-bit-breite unidirektionale ATM-spezifische-Busschnittstellen (UTOPIA-Schnittstellen) und eine STM-1-Schnittstelle (Synchroner Transfer Modus mit einer Übertragungsbitrate von 155 Mbit/s) z.B. für einen Anschluß einer Glasfaserleitung aufweist. Durch diesen Baustein ist eine Umsetzung eines ATM-Datenstromes auf einen STM-Datenstrom und umgekehrt realisierbar. Dieser Steuerbaustein wird dabei durch einen, über einen der anschließbaren 8-bit-breiten Datenbusse (UTOPIA-Schnittstelle) ausgeführten Datentransfer gesteuert, d.h. dieser Steuerbaustein ist ein 'Slave'-Baustein für die an ihn anschließbaren 8-bit-breiten Datenbusse.

Aus EP 0 492 440 A1 ist eine ATM-Schnittstelleneinrichtung bekannt, über welche eine Datenübermittlung zwischen zwei ATM-Einrichtungen unter Zwischenspeicherung der zu übermittelten Daten in einem FIFO-Speicher (First In First Out) realisiert wird. Ein Einspeichern bzw. Auslesen von Daten aus dem FIFO-Speicher erfolgt mittels einer Aktivierung des FIFO-Speichers durch ein von einer ATM-Einrichtung gesendetes Lese- bzw. Schreibsignal.

Der vorliegenden Erfindung liegt die Aufgabe zugrunde, ein Verfahren und eine Anordnung für eine Datenübertragung zwischen einer ersten als 'Master' konfigurierten und einer zweiten, als 'Slave' konfigurierten ATM-Einrichtung anzugeben, mit dem sich unterscheidende Datenverarbeitungskapazitäten der ersten und der zweiten ATM-Einrichtung ausgeglichen werden.

Die Lösung dieser Aufgabe erfolgt erfindungsgemäß mit den Merkmalen des Patentanspruchs 1 und 2 bzw. 7.

Durch ein Zwischenschalten einer ATM-Schnittstelleneinrichtung, die über einen ersten Datenbus mit der ersten ATM-Einrichtung und über einen zweiten Datenbus mit der zweiten ATM-Einrichtung verbunden ist, wird eine zeitliche Entkopplung des ersten Datenbusses vom zweiten Datenbus realisiert, so daß der erste und der zweite Datenbus mit einer separaten, voneinander unterschiedlichen Taktrate betrieben werden können.

Durch ein Zwischenspeichern von, zwischen der ersten und der zweiten ATM-Einrichtung zu übermittelnden Daten, können - insbesondere durch die ATM-Übermittlungstechnik hervorgerufene - Schwankungen in der Datenübertragungsrate ausgeglichen werden.

Ein weiterer Vorteil der Erfindung besteht darin, daß die ATM-Schnittstelleneinrichtung sowohl mit einem minimalen HW-Aufwand als auch mit einer einfachen Software für die Steuerung des Datentransfers realisierbar ist.

Vorteilhafte Weiterbildungen der Erfindung sind in den Unteransprüchen angegeben.

Ein Ausführungsbeispiel der Erfindung wird im folgenden anhand der Zeichnung näher erläutert.

Dabei zeigen:
- Fig 1:: ein Strukturbild zur schematischen Darstellung der im Rahmen eines Datentransfers zwischen einer ersten ATM-Einrichtung und einer zweiten ATM-Einrichtung beteiligten wesentlichen Funktionseinheiten;
- Fig 2:: ein Ablaufdiagramm für einen Datentransfer von einer ersten ATM-Einrichtung zu einem ersten Speicher der ATM-Schnittstelleneinrichtung;
- Fig 3:: ein Ablaufdiagramm für einen Datentransfer von einem ersten Speicher der ATM-Schnittstelleneinrichtung zu einer zweiten ATM-Einrichtung;
- Fig 4:: ein Ablaufdiagramm für einen Datentransfer von einer zweiten ATM-Einrichtung zu einem zweiten Speicher der ATM-Schnittstelleneinrichtung;
- Fig 5:: ein Ablaufdiagramm für einen Datentransfer von einem zweiten Speicher der ATM-Schnittstelleneinrichtung zu einer ersten ATM-Einrichtung.

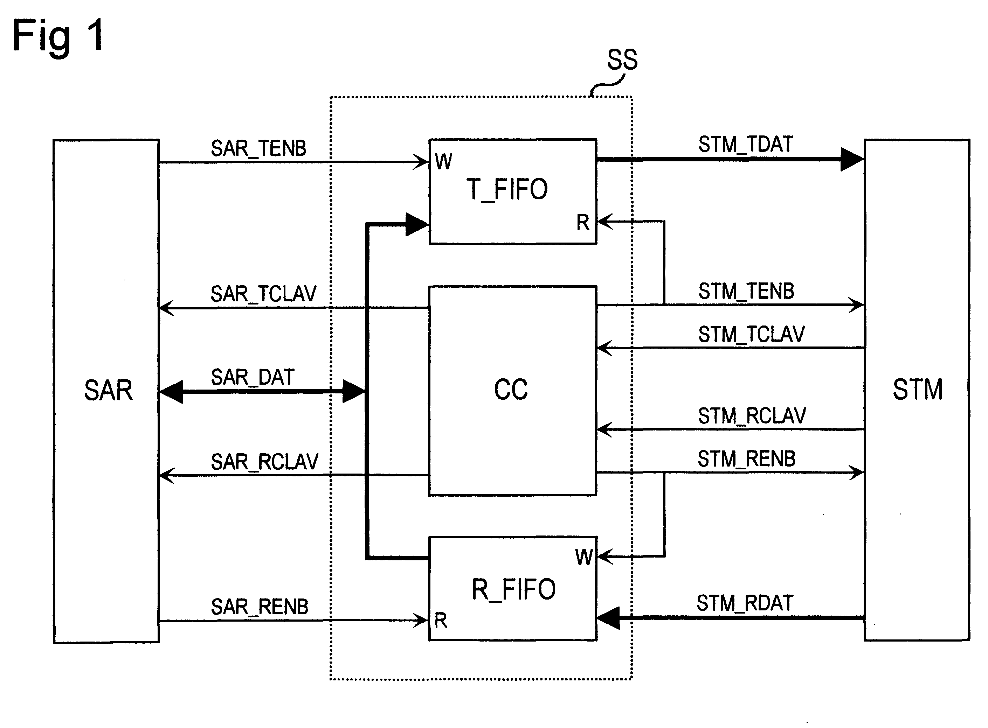

Fig 1 zeigt eine schematische Darstellung der im Rahmen eines Datentransfers zwischen einer ersten ATM-Einrichtung SAR und einer zweiten ATM-Einrichtung STM beteiligten wesentlichen Funktionseinheiten. Die erste ATM-Einrichtung SAR ist über einen ersten, mit einer ersten Taktrate betriebenen bidirektionalen Datenbus SAR_DAT mit einer ATM-Schnittstelleneinrichtung SS verbunden. Die zweite ATM-Einrichtung STM ist über einen zweiten und einen dritten, mit einer zweiten, von der ersten verschiedenen Taktrate betriebenen unidirektionalen Datenbus STM_TDAT; STM_RDAT mit der ATM-Schnittstelleneinrichtung SS verbunden.

Die ATM-Schnittstelleneinrichtung SS weist ein Kontrollmodul CC, einen ersten FIFO-Speicher T_FIFO und einen zweiten FIFO-Speicher R_FIFO (First In First Out) auf. Der erste FIFO-Speicher T_FIFO dient einer Zwischenspeicherung von, von der ersten ATM-Einrichtung SAR zur zweiten ATM-Einrichtung STM zu übermittelnden Daten. Der zweite FIFO-Speicher R_FIFO dient einer Zwischenspeicherung von, von der zweiten ATM-Einrichtung STM zur ersten ATM-Einrichtung SAR zu übermittelnden Daten. Das Kontrollmodul CC ermittelt die Speicherfüllstände des ersten FIFO-Speichers T_FIFO und des zweiten FIFO-Speichers R_FIFO.

Ist ein einstellbarer Speicherfüllwert SPF des ersten FIFO-Speichers T_FIFO nicht überschritten, signalisiert das Kontrollmodul CC durch eine erste Empfängerstatus-Information SAR_TCLAV freie Speicherkapazität des ersten FIFO-Speichers T_FIFO an die erste ATM-Einrichtung SAR. Sind im zweiten FIFO-Speicher R_FIFO an die erste ATM-Einrichtung SAR zu übermittelnde Daten zwischengespeichert, signalisiert das Kontrollmodul CC dies durch eine zweite Senderstatus-Information SAR_RCLAV an die erste ATM-Einrichtung SAR.

Der erste FIFO-Speicher T_FIFO und der zweite FIFO-Speicher R_FIFO weisen jeweils eingangsseitig einen ersten Speichersteuereingang W und ausgangsseitig einen zweiten Speichersteuereingang R auf. Wird der erste Speichersteuereingang W eines FIFO-Speichers T_FIFO, R_FIFO durch ein Schreib-Signal SAR_TENB, STM_RENB aktiviert, liest der FIFO-Speicher T_FIFO, R_FIFO über einen eingangsseitig mit dem FIFO-Speicher T_FIFO, R_FIFO verbundenen Datenbus SAR_DAT, STM_RDAT empfangene Daten und speichert diese ein. Wird der zweite Speichersteuereingang R eines FIFO-Speichers T_FIFO, R_FIFO durch ein Lese-Signal STM_TENB, SAR_RENB aktiviert, liest der FIFO-Speicher T_FIFO, R_FIFO zwischengespeicherte Daten aus und gibt diese auf einen ausgangsseitig mit dem FIFO-Speicher T_FIFO, R_FIFO verbundenen Datenbus STM_TDAT, SAR_DAT aus.

Kann die zweite ATM-Einrichtung STM Daten von der ersten ATM-Einrichtung SAR empfangen, signalisiert sie dies durch eine zweite Empfängerstatus-Information STM_TCLAV an das Kontrollmodul CC. Weist die zweite ATM-Einrichtung STM zur ersten ATM-Einrichtung SAR zu übermittelnde Daten auf, signalisiert sie dies durch eine erste Senderstatus-Information STM_RCLAV an das Kontrollmodul CC.

Bevor auf die weiteren Figuren näher eingegangen wird, erscheint es für ein besseres Verständnis derselben angebracht, den wesentlichen Aufbau einer ATM-Nachricht kurz darzulegen. Bei dem als Asynchronen Transfer Modus (ATM) bekannten Übertragungsverfahren werden für den Datentransport Datenpakete fester Länge, sogenannte Zellen benutzt. Eine ATM-Zelle setzt sich aus einem, die für den Transport einer ATM-Zelle relevanten Vermittlungs-Daten enthaltenden, fünf Bytes langem Zellkopf, dem sogenannten 'header' und einem 48 Bytes langem Nutzdatenfeld, dem sogenannten 'payload' zusammen.

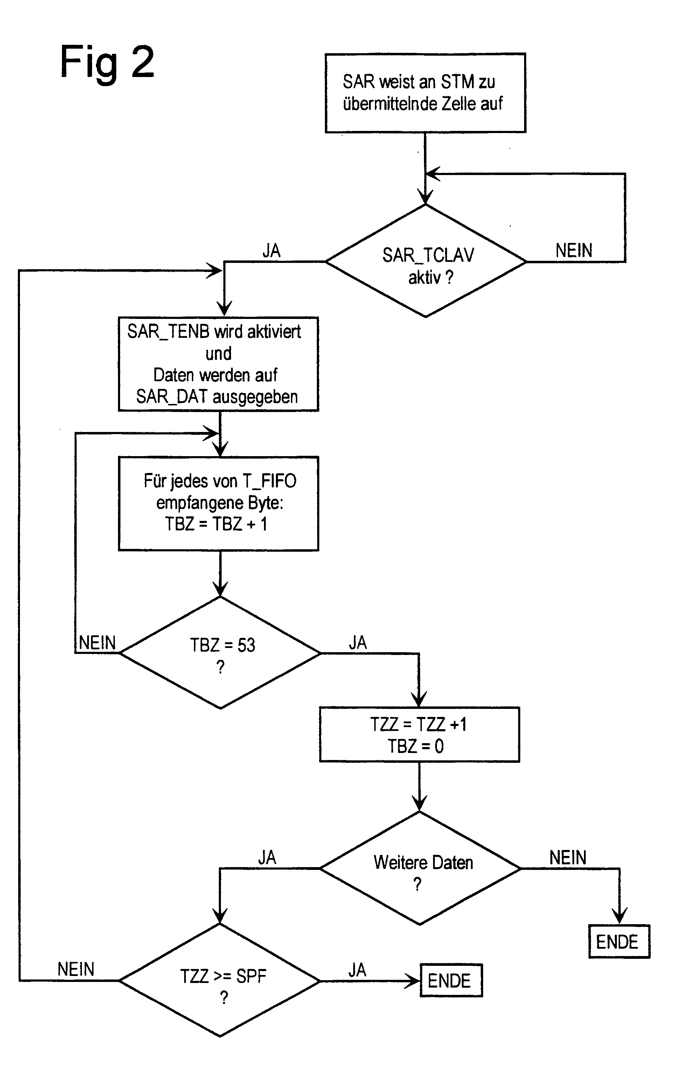

Fig 2 zeigt ein Ablaufdiagramm für einen Datentransfer von der ersten ATM-Einrichtung SAR zum ersten FIFO-Speicher T_FIFO. Weist die erste ATM-Einrichtung SAR eine zur zweiten ATM-Einrichtung STM zu übermittelnde ATM-Zelle auf, überprüft die erste ATM-Einrichtung SAR, ob die erste Empfängerstatus-Information SAR_TCLAV aktiv ist, d.h. der erste FIFO-Speicher T_FIFO besitzt freie Speicherkapazität. Das Kontrollmodul CC aktiviert die erste Empfängerstatus-Information SAR_TCLAV, wenn ein speicherindividueller Zell-Zähler TZZ, der die Anzahl der im ersten FIFO-Speicher T_FIFO gespeicherten Zellen signalisiert, kleiner als ein voreinstellbarer Speicherfüllwert SPF ist. Ist die erste Empfängerstatus-Information SAR_TCLAV aktiv, aktiviert die erste ATM-Einrichtung SAR durch das Schreib-Signal SAR_TENB den ersten Speichersteuereingang W des ersten FIFO-Speichers T_FIFO und gibt die zu übermittelnde ATM-Zelle byteweise auf den ersten, die erste ATM-Einrichtung SAR mit dem ersten FIFO-Speicher T_FIFO und dem zweiten FIFO-Speicher R_FIFO verbindenden Datenbus SAR_DAT aus. Solange der erste Speichersteuereingang W des ersten FIFO-Speichers T_FIFO aktiviert ist, liest der erste FIFO-Speicher T_FIFO über den ersten Datenbus SAR_DAT empfangene Daten und speichert diese ein.

Für jedes vom ersten FIFO-Speicher T_FIFO gelesene Byte wird ein speicherindividueller Byte-Zähler TBZ um den Wert 1 inkrementiert. Erreicht der speicherindividuelle Byte-Zähler TBZ den Wert 53, d.h. es wurden 53 Bytes - entspricht einer ATM-Zelle - von der ersten ATM-Einrichtung SAR zum ersten FIFO-Speicher T_FIFO übermittelt, wird der speicherindividuelle Zell-Zähler TZZ um den Wert 1 inkrementiert und der speicherindividuelle Byte-Zähler TBZ auf den Wert 0 zurückgesetzt.

Weist die erste ATM-Einrichtung SAR eine weitere, zur zweiten ATM-Einrichtung STM zu übermittelnde ATM-Zelle auf, überprüft die erste ATM-Einrichtung SAR, ob die erste Empfängerstatus-Information SAR_TCLAV weiter aktiv ist, d.h. der speicherindividuelle Zell-Zähler TZZ ist weiterhin kleiner als der einstellbare Speicherfüllwert SPF, und setzt gegebenenfalls das Verfahren fort.

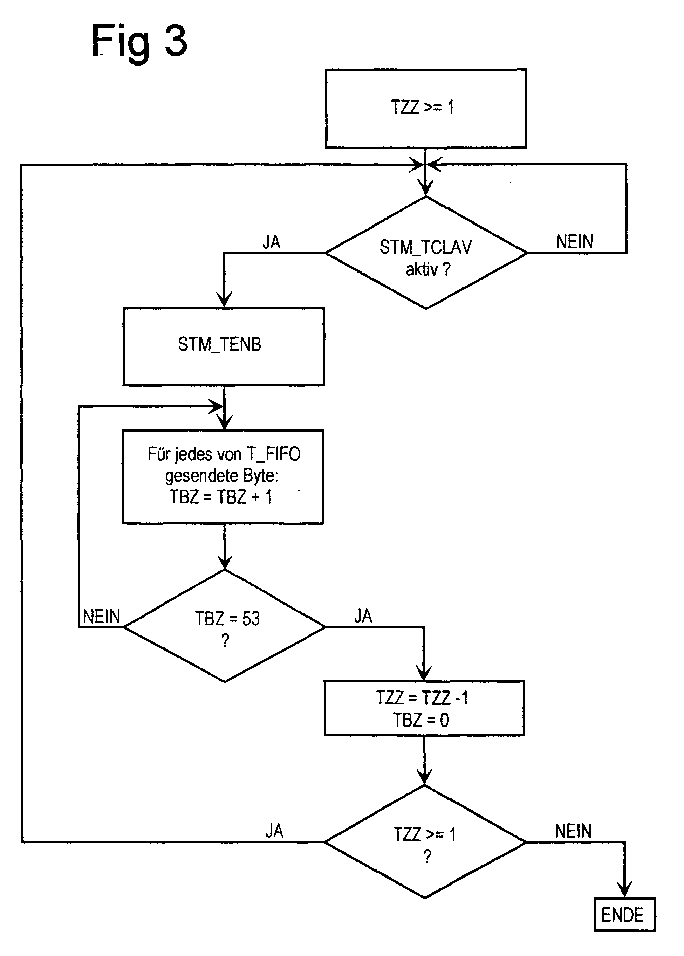

Fig 3 zeigt ein Ablaufdiagramm für einen Datentransfer vom ersten FIFO-Speicher T_FIFO zur zweiten ATM-Einrichtung STM. Sind im ersten FIFO-Speicher T_FIFO an die zweite ATM-Einrichtung STM zu übermittelnde Daten zwischengespeichert, d.h. der speicherindividuelle Zell-Zähler TZZ ist größer oder gleich dem Wert 1, überprüft das Kontrollmodul CC, ob die zweite Senderstatus-Information STM_TCLAV aktiv ist, d.h. ob die zweite ATM-Einrichtung STM Daten von der ersten ATM-Einrichtung SAR empfangen kann. Ist dies der Fall, aktiviert das Kontrollmodul CC durch ein Lese-Signal STM_TENB den zweiten Speichersteuereingang R des ersten FIFO-Speichers T_FIFO und die zweite ATM-Einrichtung STM. Solange der zweite Speichersteuereingang R des ersten FIFO-Speichers T_FIFO aktiviert ist, gibt der erste FIFO-Speicher T_FIFO Daten byteweise auf den zweiten, den ersten FIFO-Speicher T_FIFO mit der zweiten ATM-Einrichtung STM verbindenden Datenbus STM_TDAT aus, von dem sie von der zweiten ATM-Einrichtung STM gelesen werden.

Für jedes vom ersten FIFO-Speicher T_FIFO gesendete Byte wird der speicherindividuelle Byte-Zähler TBZ um den Wert 1 inkrementiert. Erreicht der speicherindividuelle Byte-Zähler TBZ den Wert 53, d.h. es wurden 53 Bytes vom ersten FIFO-Speicher T_FIFO zur zweiten ATM-Einrichtung STM übermittelt, wird der speicherindividuelle Zell-Zähler TZZ um den Wert 1 dekrementiert und der speicherindividuelle Byte-Zähler TBZ auf den Wert 0 zurückgesetzt. In einem nächsten Schritt überprüft das Kontrollmodul CC, ob im ersten FIFO-Speicher T_FIFO eine weitere ATM-Zelle gespeichert ist, d.h. der speicherindividuelle Zell-Zähler TZZ ist weiterhin größer oder gleich dem Wert 1. Ist dies der Fall, überprüft das Kontrollmodul CC erneut, ob eine zweite Empfängerstatus-Information STM_TCLAV aktiv ist und setzt das Verfahren gegebenenfalls fort.

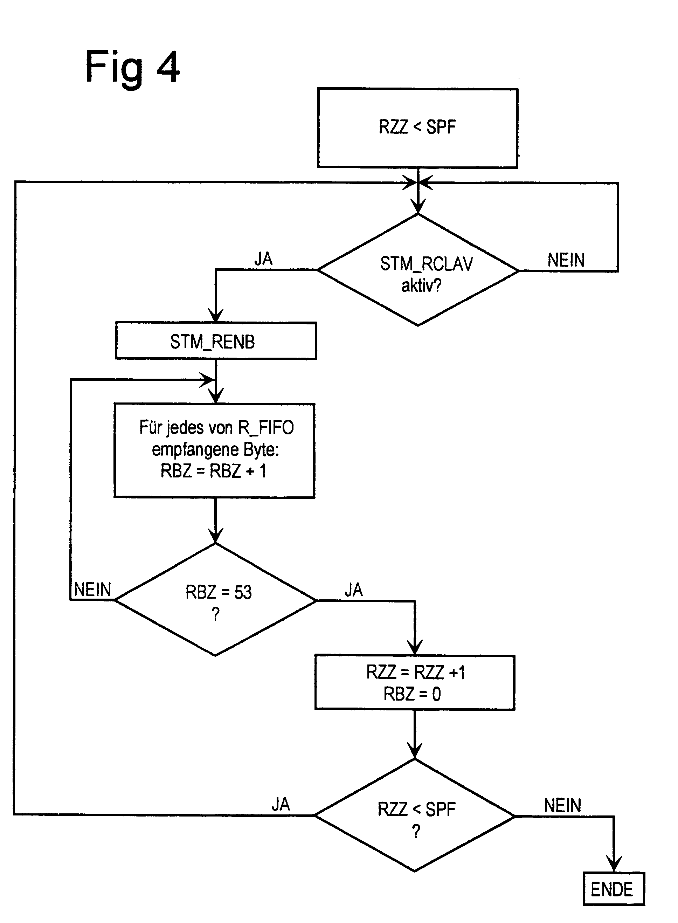

Fig 4 zeigt ein Ablaufdiagramm für einen Datentransfer von der zweiten ATM-Einrichtung STM zum zweiten FIFO-Speicher R_FIFO. Weist der zweite FIFO-Speicher R_FIFO freie Speicherkapazität auf, d.h. ein speicherindividueller Zell-Zähler RZZ, der die Anzahl der im zweiten FIFO-Speicher R_FIFO gespeicherten Zellen signalisiert, ist kleiner als der einstellbare Speicherfüllwert SPF, überprüft das Kontrollmodul CC, ob die erste Senderstatus-Information STM_RCLAV aktiv ist, d.h. ob die zweite ATM-Einrichtung STM zur ersten ATM-Einrichtung SAR zu übermittelnde Daten aufweist. Ist dies der Fall, aktiviert das Kontrollmodul CC durch ein Schreib-Signal STM_RENB den ersten Speichersteuereingang W des zweiten FIFO-Speichers R_FIFO und die zweite ATM-Einrichtung STM. Solange der erste Speichersteuereingang W des zweiten FIFO-Speichers R_FIFO aktiviert ist, liest der zweite FIFO-Speicher R_FIFO über den dritten, die zweite ATM-Einrichtung STM mit dem zweiten FIFO-Speicher R_FIFO verbindenden Datenbus STM_RDAT empfangene, aufgrund des Schreib-Signals STM_RENB von der zweiten ATM-Einrichtung STM auf den dritten Datenbus STM_RDAT ausgegebene Daten und speichert diese ein.

Für jedes vom zweiten FIFO-Speicher R_FIFO gelesene Byte wird ein speicherindividueller Byte-Zähler RBZ um den Wert 1 inkrementiert. Erreicht der speicherindividuelle Byte-Zähler RBZ den Wert 53, d.h. es wurden 53 Bytes von der zweiten ATM-Einrichtung STM zum zweiten FIFO-Speicher R_FIFO übermittelt, wird der speicherindividuelle Zell-Zähler RZZ um den Wert 1 inkrementiert und der speicherindividuelle Byte-Zähler RBZ auf den Wert 0 zurückgesetzt. In einem nächsten Schritt überprüft das Kontrollmodul CC, ob im zweiten FIFO-Speicher R_FIFO weitere Speicherkapazität vorhanden ist, d.h. der speicherindividuelle Zell-Zähler RZZ ist weiterhin kleiner als der einstellbare Speicherfüllwert SPF. Ist dies der Fall, überprüft das Kontrollmodul CC erneut, ob eine erste Senderstatus-Information STM_RCLAV aktiv ist, d.h. ob die zweite ATM-Einrichtung STM weitere zur ersten ATM-Einrichtung SAR zu übermittelnde Daten aufweist und setzt das Verfahren gegebenenfalls fort.

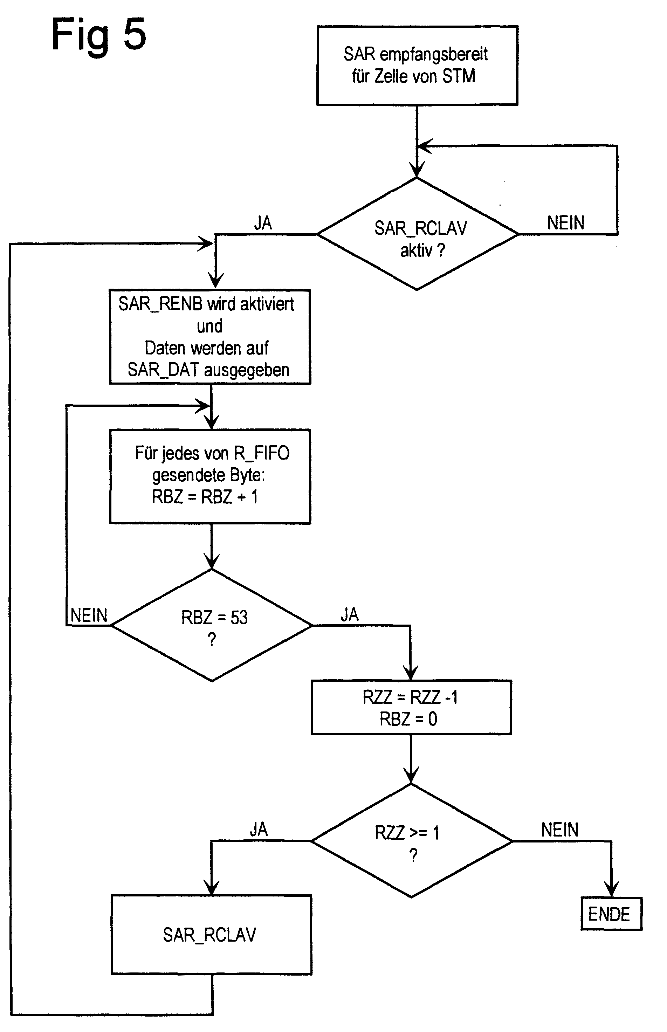

Fig 5 zeigt ein Ablaufdiagramm für einen Datentransfer vom zweiten FIFO-Speicher R_FIFO zur ersten ATM-Einrichtung SAR. Kann die erste ATM-Einrichtung SAR eine ATM-Zelle von der zweiten ATM-Einrichtung STM empfangen, überprüft die erste ATM-Einrichtung SAR, ob die zweite Senderstatus-Information SAR_RCLAV aktiv ist, d.h. ob im zweiten FIFO-Speicher R_FIFO mindestens eine an die erste ATM-Einrichtung SAR zu übermittelnde ATM-Zelle zwischengespeichert ist. Das Kontrollmodul CC aktiviert die zweite Senderstatus-Information SAR_RCLAV, wenn der speicherindividuelle Zell-Zähler RZZ größer oder gleich dem Wert 1 ist. Ist die zweite Senderstatus-Information SAR_RCLAV aktiv, aktiviert die erste ATM-Einrichtung SAR durch das Lese-Signal SAR_RENB den zweiten Speichersteuereingang R des zweiten FIFO-Speichers R_FIFO. Solange der zweite Speichersteuereingang R des zweiten FIFO-Speichers R_FIFO aktiviert ist, gibt der zweite FIFO-Speicher R_FIFO Daten byteweise auf den ersten Datenbus SAR_DAT aus, von dem sie von der ersten ATM-Einrichtung SAR gelesen werden.

Für jedes vom zweiten FIFO-Speicher R_FIFO gesendete Byte wird der speicherindividuelle Byte-Zähler RBZ um den Wert 1 inkrementiert. Erreicht der speicherindividuelle Byte-Zähler RBZ den Wert 53, d.h. es wurden 53 Bytes vom zweiten FIFO-Speicher R_FIFO zur ersten ATM-Einrichtung SAR übermittelt, wird der speicherindividuelle Zell-Zähler RZZ um den Wert 1 dekrementiert und der speicherindividuelle Byte-Zähler RBZ auf den Wert 0 zurückgesetzt. In einem nächsten Schritt überprüft das Kontrollmodul CC, ob im zweiten FIFO-Speicher R_FIFO eine weitere ATM-Zelle gespeichert ist, d.h. der speicherindividuelle Zell-Zähler RZZ ist weiterhin größer oder gleich dem Wert 1. Ist dies der Fall, aktiviert das Kontrollmodul CC die zweite Senderstatus-Information STM_RCLAV, so daß die erste ATM-Einrichtung SAR einen weiteren Datentransfer einleiten kann.

## Patentansprüche

1. Verfahren für eine Datenübertragung von einer ersten, die Datenübertragung steuernden ATM-Einrichtung (SAR) zu einer zweiten, durch die Datenübertragung gesteuerten ATM-Einrichtung (STM) über eine ATM-Schnittstelleneinrichtung (SS), wobei von einem Kontrollmodul (CC) der ATM-Schnittstelleneinrichtung (SS) eine erste Empfängerstatus-Information (SAR_TCLAV), zum Signalisieren freier Speicherkapazität eines Speichers (T_FIFO) der ATM-Schnittstelleneinrichtung (SS), an die erste ATM-Einrichtung (SAR) übermittelt wird,
- in Fällen, in denen die erste ATM-Einrichtung (SAR) an die zweite ATM-Einrichtung (STM) zu übermittelnde Daten aufweist und der Speicher (T_FIFO) freie Speicherkapazität aufweist, ein erster Speichersteuereingang (W) des Speichers (T_FIFO) durch die erste ATM-Einrichtung (SAR) aktiviert wird und die zu übermittelnden Daten von der ersten ATM-Einrichtung (SAR) auf einen, die erste ATM-Einrichtung (SAR) mit dem Speicher (T_FIFO) verbindenden ersten Datenbus (SAR_DAT) ausgegeben werden,
- solange der erste Speichersteuereingang (W) aktiviert ist, vom Speicher (T_FIFO) über den ersten Datenbus (SAR_DAT) empfangene Daten zwischengespeichert werden,
wobei von der zweiten ATM-Einrichtung (STM) eine zweite Empfängerstatus-Information (STM_TCLAV), zum Signalisieren einer Bereitschaft zum Empfangen von Daten an das Kontrollmodul (CC) übermittelt wird,
- in Fällen, in denen im Speicher (T_FIFO) an die zweite ATM-Einrichtung (STM) zu übermittelnde Daten zwischengespeichert sind, ein zweiter Speichersteuereingang (R) des Speichers (T_FIFO) durch das Kontrollmodul (CC) aktiviert wird,
- solange der zweite Speichersteuereingang (R) aktiviert ist, vom Speicher (T_FIFO) die zwischengespeicherten Daten auf einen, den Speicher (T_FIFO) mit der zweiten ATM-Einrichtung (STM) verbindenden zweiten Datenbus (STM_TDAT) ausgegeben werden.

2. Verfahren für eine Datenübertragung von einer zweiten, durch die Datenübertragung gesteuerten ATM-Einrichtung (STM) zu einer ersten, die Datenübertragung steuernden ATM-Einrichtung (SAR) über eine ATM-Schnittstelleneinrichtung (SS), wobei von der zweiten ATM-Einrichtung (STM) eine erste Senderstatus-Information (STM_RCLAV), zum Signalisieren eines Vorliegens von zur ersten ATM-Einrichtung (SAR) zu übermittelnden Daten an ein Kontrollmodul (CC) der ATM-Schnittstelleneinrichtung (SS) übermittelt wird,
- in Fällen, in denen ein Speicher (R_FIFO) der ATM-Schnittstelleneinrichtung (SS) freie Speicherkapazität aufweist, ein erster Speichersteuereingang (W) des Speichers (R_FIFO) und die zweite ATM-Einrichtung (STM) durch das Kontrollmodul (CC) aktiviert wird,
- solange die zweite ATM-Einrichtung (STM) aktiviert ist, von dieser die zu übermittelnden Daten auf einen, die zweite ATM-Einrichtung (STM) mit dem Speicher (R_FIFO) verbindenden zweiten Datenbus (STM_RDAT) ausgegeben werden,
- solange der erste Speichersteuereingang (W) aktiviert ist, vom Speicher (R_FIFO) über den zweiten Datenbus (STM_RDAT) empfangene Daten zwischengespeichert werden,
wobei von dem Kontrollmodul (CC) eine zweite Senderstatus-Information (SAR_RCLAV), zum Signalisieren eines Vorliegens von im Speicher (R_FIFO) zwischengespeicherter Daten an die erste ATM-Einrichtung (SAR) übermittelt wird,
- in Fällen, in denen die erste ATM-Einrichtung (SAR) für einen Datenempfang bereit ist, ein zweiter Speichersteuereingang (R) des Speichers (R_FIFO) durch die erste ATM-Einrichtung (SAR) aktiviert wird,
- solange der zweite Speichersteuereingang (R) aktiviert ist, vom Speicher (R_FIFO) die zwischengespeicherten Daten auf einen, den Speicher (R_FIFO) mit der ersten ATM-Einrichtung (SAR) verbindenden ersten Datenbus (SAR_DAT) ausgegeben werden.

3. Verfahren nach Anspruch 1 oder 2,
**dadurch gekennzeichnet,**
**daß** für jedes von dem Speicher (T_FIFO, R_FIFO) empfangene Datenwort ein speicherindividueller Datenwort-Zähler (TBZ, RBZ) um einen ersten Wert verändert wird, und in Fällen, in denen der speicherindividuelle Datenwort-Zähler (TBZ, RBZ) einen einstellbaren Grenzwert erreicht, ein Datenpaket-Zähler (TZZ, RZZ) um einen zweiten Wert verändert wird.

4. Verfahren nach Anspruch 1, 2 oder 3,
**dadurch gekennzeichnet,**
**daß** für jedes von dem Speicher (T_FIFO, R_FIFO) gesendete Datenwort ein speicherindividueller Datenwort-Zähler (TBZ, RBZ) um einen ersten Wert verändert wird, und in Fällen, in denen der speicherindividuelle Datenwort-Zähler (TBZ, RBZ) einen einstellbaren Grenzwert erreicht, ein Datenpaket-Zähler (TZZ, RZZ) um einen zweiten Wert verändert wird.

5. Verfahren nach Anspruch 3,
**dadurch gekennzeichnet,**
**daß** sobald der Datenpaket-Zähler (TZZ, RZZ) kleiner als ein einstellbarer oberer Speicherfüllwert (SPF) des Speichers (T_FIFO, R_FIFO) ist, von dem Speicher (T_FIFO, R_FIFO) eine Daten-Empfangsbereitschaft signalisiert wird.

6. Verfahren nach Anspruch 4,
**dadurch gekennzeichnet,**
**daß** sobald der Datenpaket-Zähler (TZZ, RZZ) größer oder gleich einem einstellbaren unteren Speicherfüllwert des Speichers (T_FIFO, R_FIFO) ist, von dem Speicher (T_FIFO, R_FIFO) eine Sendebereitschaft für Daten signalisiert wird.

7. ATM-Schnittstelleneinrichtung,
mit mindestens einem ersten Datenbus (SAR_DAT) zum Anschluß an eine, einen Datentransfer steuernde erste ATM-Zugriffssteuereinrichtung (SAR), und mit mindestens einem zweiten Datenbus (STM_TDAT, STM_RDAT) zum Anschluß an eine, durch einen Datentransfer gesteuerte zweite ATM-Zugriffssteuereinrichtung (STM),
mit einem ersten Speicher (T_FIFO) zum Zwischenspeichern von, von der ersten zur zweiten Zugriffssteuereinrichtung (SAR; STM) zu übermittelnden Daten,
mit einem zweiten Speicher (R_FIFO) zum Zwischenspeichern von, von der zweiten zur ersten Zugriffssteuereinrichtung (STM; SAR) zu übermittelnden Daten,
mit einem Kontrollmodul (CC) zum Ermitteln von freien Speicherkapazitäten des ersten und des zweiten Speichers (T_FIFO; R_FIFO) und zum Übermitteln
- einer Empfängerstatus-Information (SAR_TCLAV), für ein Signalisieren freier Speicherkapazität des ersten Speichers (T_FIFO) an die erste Zugriffssteuereinrichtung (SAR),
- einer Senderstatus-Information (STM_RCLAV), für ein Signalisieren eines Vorliegens von, vom zweiten Speicher (R_FIFO) zur ersten Zugriffssteuereinrichtung (SAR) zu übermittelnden Daten, an die erste Zugriffssteuereinrichtung (SAR),
- eines Lese-Signals (STM_TENB) an den ersten Speicher (T_FIFO), und
- eines Schreib-Signals (STM_RENB) an den zweiten Speicher (R_FIFO),
wobei der erste Speicher (T_FIFO)
- einen ersten Speichersteuereingang (W) zum Ansteuern durch die erste Zugriffssteuereinrichtung (SAR) aufweist, derart daß bei Aktivierung des ersten Speichersteuereingangs (W) ein Einspeichern von, von der ersten Zugriffssteuereinrichtung (SAR) übermittelten Daten erfolgt, und
- einen zweiten Speichersteuereingang (R) zum Ansteuern durch das Lese-Signal (STM_TENB) des Kontrollmoduls (CC) aufweist, derart daß bei Aktivierung des zweiten Speichersteuereingangs (R) ein Übermitteln von im ersten Speicher (T_FIFO) gespeicherten Daten an die zweite Zugriffssteuereinrichtung (STM) erfolgt,
wobei der zweite Speicher (R_FIFO)
- einen ersten Speichersteuereingang (W) zum Ansteuern durch das Schreib-Signal (STM_RENB) des Kontrollmoduls (CC) aufweist, derart daß bei Aktivierung des ersten Speichersteuereingangs (W) ein Einspeichern von, von der zweiten Zugriffssteuereinrichtung (STM) übermittelten Daten erfolgt, und
- einen zweiten Speichersteuereingang (R) zum Ansteuern durch die erste Zugriffssteuereinrichtung (SAR) aufweist, derart daß bei Aktivierung des zweiten Speichersteuereingangs (R) ein Übermitteln von im zweiten Speicher (R_FIFO) gespeicherter Daten an die erste Zugriffssteuereinrichtung (SAR) erfolgt.

8. Anordnung nach Anspruch 7,
**dadurch gekennzeichnet,**
**daß** der erste und der zweite Speicher (R_FIFO, T_FIFO) FIFO-Speicher (First In First Out) sind.

## Claims

1. Method for a data transmission from a first ,ATM device (SAR) controlling the data transmission to a second ATM device (STM) controlled by the data transmission via an ATM interface device (SS), where a control module (CC) of the ATM interface device (SS) transfers a first receiver status information (SAR TCLAV) to signal free memory capacity of a memory (T_FIFO) of the ATM interface device (SS) to the first ATM device (SAR),
- in cases in which the first ATM device (SAR) has data for transfer to the second ATM device (STM) and the memory (T_FIFO) has free capacity, a first memory control input (W) of the memory (T_FIFO) is activated by the first ATM device (SAR) and the data to be transferred is output from the first ATM device (SAR) on a first data bus (SAR_DAT) connecting the first ATM device (SAR) with the memory (T_FIFO),
- For as long as the first memory control input (W) is activated, data received in the memory(T_FIFO) via the first data bus (SAR_DAT) is buffered,
in which case a second receiver status information (STM_TCLAV) to signal readiness for receiving data is transferred to the control module (CC) from the second ATM device (STM) ,
- in cases in data to be transferred to a second ATM device (STM) is buffered in memory (T_FIFO) a second memory control input (R) of the memory (T_FIFO) will be activated by the control module (CC),
- for as long as the second memory control input (R) is activated, the buffered data is output from the memory (T_FIFO) on a second data bus (STM_TDAT) connecting the memory (T_FIFO) with the second ATM device (STM).

2. Method for a data transmission from a second ATM device (STM) controlled by the data transmission to a first ATM device (SAR) controlling the data transmission via an ATM interface device (SS), where a first transmitter status information (STM_RCLAV) to signal the presence of data to be transmitted to the first ATM device (SAR) is transferred by a second ATM device (STM) to a control module (CC) of the ATM interface device (SS),
- in cases in which a memory(R_FIFO) of the ATM interface device (SS) has free memory capacity, a first memory control input (W) of the memory (R_FIFO.) and the second ATM device (STM) are activated by the control module (CC),
- for as long as the second ATM device (STM) is activated, data to be transferred from this is output on a second data bus (STM_RDAT) connecting the second ATM device (STM) with the memory (R_FIFO),
- for as long as the first memory control input (W) is activated, data received by the memory (R_FIFO) via the second data bus (STM_RDAT) is buffered,
where the control module (CC) transfers a second transmitter status information (SAR_RCLAV), to signal the presence of data buffered in the memory (R_FIFO) to the first ATM device (SAR),
- in cases in which the first ATM device (SAR) is ready to receive data, a second memory control input (R) of the memory (R_FIFO) is activated by the first ATM device (SAR),
- for as long as the second memory control input (R) is activated, the buffered data is output from memory (R_FIFO) on a first data bus (SAR DAT) connecting the memory(R_FIFO.) with the first ATM device (SAR).

3. Method in accordance with Claim 1 or 2,
in which,
for each data word received by the memory (T_FIFO, R_FIFO) a memory-individual data word counter (TBZ, RBZ) is modified by a first value and in cases in which the memory-individual data word counter (TBZ, RBZ) reaches a selectable value, a data packet counter (TZZ, RZZ) is modified by a second value.

4. Method in accordance with Claim 1 or 2,
in which
for each data word sent by the memory (T_FIFO, R_FIFO) a memory-individual data word counter (TBZ, RBZ) is modified by a first value, and in case in which the memory-individual data word counter (TBZ, RBZ) reaches a selectable limit value, a data packet counter (TZZ, RZZ) is modified by a second value.

5. Method according to Claim 3,
in which
as soon as the data packet counter(TZZ, RZZ) is less than a selectable upper memory occupancy value (SPF) of the memory (T_FIFO, R_FIFO) the memory (T_FIFO, R_FIFO.) signals that it is ready to receive data.

6. Method according to Claim 4,
in which
as soon as the data packet counter (TZZ, RZZ) is greater than or equal to a selectable lower memory occupancy value of the memory (T_FIFO, R_FIFO), the memory (T_FIFO, R_FIFO.) signals that it is ready to send data.

7. ATM interface device
with at least a first data bus (SAR_DAT) for connection to an ATM access control device (SAR) controlling a data transfer, and with at least a second data bus (STM_TDAT, STM_RDAT) for connection to a second ATM access control device (STM) controlled by the data transfer, with a first memory (T_FIFO) for buffering data to be transferred from the first to the second access control device (SAR;STM),
with a second memory (R_FIFO) for buffering data to be transferred from the second to the first access control device (STM;SAR),
with a control module CC (CC) to determine the free memory capacity of the first and of the second memory (T_FIFO;R_FIFO) and to transfer
- a receiver status information (SAR TCLAV), for signalling free memory capacity from the first memory (T_FIFO) to the first access control device (SAR),
- a transmitter status information (STM RCLAV), for signalling to the first access control device (SAR) the presence of data to be transferred from the second memory (R_FIFO) to the first access control device (SAR),
- a read signal (STM_TENB) to the first memory (T_FIFO), and
- a write signal (STM RENB) to the second memory (R_FIFO), where the first memory (T_FIFO)
- features first memory control input (W) for activation by the first access control device (SAR) such that on activation of the first memory control input (W) data transferred by the first access control device (SAR) is stored and
- features a second memory control input (R) for activation by the read signal (STM TENB) of the control module (CC) such that on activation of the second memory control input (R) data stored in the first memory (T_FIFO) is transferred to the second access control device (STM),
where the second memory (R_FIFO)
- features a first memory control input (W) for activation by the write signal (STM_RENB) of the control module (CC) such that on activation of the first memory control input (W) data transferred by the second access control device (STM) is stored and
- features a second memory control input (R) for activation by the first access control device (SAR) such that, on activation of the second memory control input (R) data stored in the second memory (R_FIFO) is transferred to the fist access control device (SAR).

8. Arrangement according to Claim 7,
in which
the first and the second memory (R_FIFO, T_FIFO) are FIFO (First In First Out) memories.

## Revendications

1. Procédé pour une transmission de données d'un premier équipement MTA (SAR) qui commande la transmission de données vers un second équipement MTA (STM) commandé par la transmission de données, par le biais d'un dispositif d'interface MTA (SS), une première information d'état du récepteur (SAR_TCLAV), qui sert à signaler la capacité de mémoire libre d'une mémoire (T_FIFO) du dispositif d'interface MTA (SS), étant transmise au premier équipement MTA (SAR) par un module de contrôle (CC) du dispositif d'interface MTA (SS),
- dans les cas où le premier équipement MTA (SAR) contient des données à transmettre au second équipement MTA (STM) et où la mémoire (T_FIFO) dispose d'une capacité de mémoire libre, une première entrée de commande de mémoire (W) de la mémoire (T_FIFO) est activée par le premier équipement MTA (SAR) et les données à transmettre sont émises par le premier équipement MTA (SAR) sur un premier bus de données (SAR_DAT) reliant le premier équipement MTA (SAR) à la mémoire (T_FIFO),
- tant que la première entrée de commande de mémoire (W) est activée, les données reçues par la mémoire (T_FIFO) par le biais du premier bus de données (SAR_DAT) font l'objet d'un stockage intermédiaire,
une seconde information d'état du récepteur (STM_TCLAV), qui sert à signaler une disponibilité à recevoir des données, étant transmise au module de contrôle (CC) par le second équipement MTA (STM),
- dans les cas où des données à transmettre au second équipement MTA (STM) font l'objet d'un stockage intermédiaire dans la mémoire (T_FIFO), une seconde entrée de commande de mémoire (R) de la mémoire (T_FIFO) est activée par le module de contrôle (CC),
- tant que la seconde entrée de commande de mémoire (R) est activée, les données faisant l'objet du stockage intermédiaire sont émises par la mémoire (T_FIFO) sur un second bus de données (STM_TDAT) reliant la mémoire (T_FIFO) au second équipement MTA (STM).

2. Procédé pour une transmission de données d'un second équipement MTA (STM) commandé par la transmission de données vers un premier équipement MTA (SAR) qui commande la transmission de données, par le biais d'un dispositif d'interface MTA (SS), une première information d'état de l'émetteur (STM_RCLAV), qui sert à signaler une présence de données à transmettre vers le premier équipement MTA (SAR), étant transmise par le second équipement MTA (STM) à un module de contrôle (CC) du dispositif d'interface MTA (SS),
- dans les cas où une mémoire (R_FIFO) du dispositif d'interface MTA (SS) dispose d'une capacité de mémoire libre, une première entrée de commande de mémoire (W) de la mémoire (R_FIFO) et le second équipement MTA (STM) sont activés par le module de contrôle (CC),
- tant que le second équipement MTA (STM) est activé, les données à transmettre sont émises par ce dernier sur un second bus de données (STM_RDAT) reliant le second équipement MTA (STM) à la mémoire (R_FIFO),
- tant que la première entrée de commande de mémoire (W) est activée, les données reçues par la mémoire (R_FIFO) par le biais du second bus de données (STM_RDAT) font l'objet d'un stockage intermédiaire,
une seconde information d'état de l'émetteur (SAR_RCLAV), qui sert à signaler une présence de données faisant l'objet d'un stockage intermédiaire dans la mémoire (R_FIFO), étant transmise au premier équipement MTA (SAR) par le module de contrôle (CC),
- dans les cas où le premier équipement MTA (SAR) est prêt à recevoir des données, une seconde entrée de commande de mémoire (R) de la mémoire (R_FIFO) est activée par le premier équipement MTA (SAR),
- tant que la seconde entrée de commande de mémoire (R) est activée, les données faisant l'objet du stockage intermédiaire sont émises par la mémoire (R_FIFO) sur un premier bus de données (SAR_DAT) reliant la mémoire (R_FIFO) au premier équipement MTA (SAR).

3. Procédé selon la revendication 1 ou 2,
**caractérisé en ce que**,
pour chaque mot de données reçu par la mémoire (T_FIFO, R_FIFO), un compte de mots de données (TBZ, RBZ), individuel pour chaque mémoire, est modifié d'une première valeur et, dans les cas où le compte de mots de données (TBZ, RBZ), individuel pour chaque mémoire, atteint une valeur limite réglable, un compte de paquets de données (TZZ, RZZ) est modifié d'une seconde valeur.

4. Procédé selon la revendication 1, 2 ou 3,
**caractérisé en ce que**,
pour chaque mot de données envoyé par la mémoire (T_FIFO, R_FIFO), un compte de mots de données (TBZ, RBZ), individuel pour chaque mémoire, est modifié d'une première valeur et, dans les cas où le compte de mots de données (TBZ, RBZ), individuel pour chaque mémoire, atteint une valeur limite réglable, un compte de paquets de données (TZZ, RZZ) est modifié d'une seconde valeur.

5. Procédé selon la revendication 3,
**caractérisé en ce que**,
dès que le compte de paquets de données (TZZ, RZZ) est inférieur à un taux supérieur de remplissage de la mémoire (SPF), réglable, de la mémoire (T_FIFO, R_FIFO), une disponibilité à recevoir des données est signalée par la mémoire (T_FIFO, R_FIFO).

6. Procédé selon la revendication 4,
**caractérisé en ce que**,
dès que le compte de paquets de données (TZZ, RZZ) est supérieur ou égal à un taux inférieur de remplissage de la mémoire, réglable, de la mémoire (T_FIFO, R_FIFO), une disponibilité d'émission pour les données est signalée par la mémoire (T_FIFO, R_FIFO).

7. Dispositif d'interface MTA,
comprenant au moins un premier bus de données (SAR_DAT) pour la connexion à un premier dispositif de commande d'accès MTA (SAR) commandant un transfert de données, et au moins un second bus de données (STM_TDAT, STM_RDAT) pour la connexion à un second dispositif de commande d'accès MTA (STM) commandé par un transfert de données,
comprenant une première mémoire (T_FIFO) pour le stockage intermédiaire des données à transmettre du premier au second dispositif de commande d'accès (SAR ; STM),
comprenant une seconde mémoire (R_FIFO) pour le stockage intermédiaire des données à transmettre du second au premier dispositif de commande d'accès (STM ; SAR),
comprenant un module de contrôle (CC) servant à déterminer les capacités de mémoire libres de la première et de la seconde mémoires (T_FIFO ; R_FIFO) et à transmettre
- une information d'état du récepteur (SAR_TCLAV) pour signaliser une capacité de mémoire libre de la première mémoire (T_FIFO) au premier dispositif de commande d'accès (SAR),
- une information d'état de l'émetteur (STM_RCLAV) pour signaliser au premier dispositif de commande d'accès (SAR) une présence de données à transmettre de la seconde mémoire (R_FIFO) au premier dispositif de commande d'accès (SAR),
- un signal de lecture (STM_TENB) à la première mémoire (T_FIFO) et
- un signal d'écriture (STM_RENB) à la seconde mémoire (R_FIFO),
la première mémoire (T_FIFO)
- étant pourvue d'une première entrée de commande de mémoire (W) permettant la commande par le premier dispositif de commande d'accès (SAR), de manière à ce qu'un stockage de données transmises par le premier dispositif de commande d'accès (SAR) ait lieu lors de l'activation de la première entrée de commande de mémoire (W) et
- étant pourvue d'une seconde entrée de commande de mémoire (R) permettant la commande par le signal de lecture (STM_TENB) du module de contrôle (CC), de manière à ce qu'une transmission de données stockées dans la première mémoire (T_FIFO) au second dispositif de commande d'accès (STM) ait lieu lors de l'activation de la seconde entrée de commande de mémoire (R),
la seconde mémoire (R_FIFO)
- étant pourvue d'une première entrée de commande de mémoire (W) permettant la commande par le signal d'écriture (STM_RENB) du module de contrôle (CC), de manière à ce qu'un stockage de données transmises par le second dispositif de commande d'accès (STM) ait lieu lors de l'activation de la première entrée de commande de mémoire (W) et
- étant pourvue d'une seconde entrée de commande de mémoire (R) permettant la commande par le premier dispositif de commande d'accès (SAR), de manière à ce qu'une transmission de données stockées dans la seconde mémoire (R_FIFO) au premier dispositif de commande d'accès (SAR) ait lieu lors de l'activation de la seconde entrée de commande de mémoire (R).

8. Dispositif selon la revendication 7, **caractérisé en ce que** la première et la seconde mémoires (R_FIFO, T_FIFO) sont des mémoires FIFO (First In First Out).
